# EUROPÄISCHE PATENTANMELDUNG

(11) **EP 2 065 576 A1**
(43) Veröffentlichungstag der Anmeldung: **03.06.2009**
(21) Anmeldenummer: 08105771.3
(22) Anmeldetag: 11.11.2008
(51) Int. Cl.: F01N 3/022, F01N 3/28, B01J 35/04, B01D 46/24

(54) **Abgasnachbehandlungseinrichtung und Filterelement zur Filterung von Abgasen einer Dieselbrennkraftmaschine**

(30) Priorität: 28.11.2007 DE 102007057138
(71) Anmelder: ROBERT BOSCH GMBH, 70442 Stuttgart (DE)
(72) Erfinder: Bressler, Harald, 70825 Korntal-Muenchingen (DE); Sulzberger, Klaus-Dieter, 71701 Schwieberdingen (DE); Hauber, Thomas, 73776 Altbach (DE)

(57) **Zusammenfassung**

Es wird ein Filterelement für eine Abgasnachbehandlungseinrichtung vorgeschlagen, bei dem die Rußbeladung über den gesamten Querschnitt vergleichmäßigt wird und die spezifische Wärmekapazität des Filterelements in einem inneren Bereich (36) des Filterelements (18) erhöht wird.

## Beschreibung

### Stand der Technik

Die Erfindung betrifft ein Filterelement und eine Abgasnachbehandlungseinrichtung zur Filterung von Ruß, insbesondere zur Filterung von Abgasen einer Dieselbrennkraftmaschine.

Aus der DE 10 2005 04 199 A1 ist ein Partikelfilter bekannt, der bevorzugt bei der Nachrüstung von Kraftfahrzeugen einsetzbar ist. Bei diesem Partikelfilter wird durch so genannte Bypasskanäle, die sowohl an der Eintrittsfläche als auch an der Austrittsfläche offen sind, verhindert, dass selbst bei zugesetztem Rußpartikelfilter, der Abgasgegendruck unzulässig weit ansteigt. Dieses Problem tritt vor allem bei so genannten Nachrüst-Partikelfiltern auf, da diese Partikelfilter nicht über die Motorsteuerung aktiv regeneriert werden können.

Bei serienmäßig ab Werk verbauten Partikelfiltern tritt das Problem auf, dass die Rußbeladung über den Querschnitt des Filterelements ungleich ist. Insbesondere in einem inneren Bereich des Partikelfilters lagert sich mehr Ruß ab als an den äußeren Bereichen des Partikelfilters, die naturgemäß von weniger Abgas durchströmt werden.

Die ungleiche Beladung des Filterelements mit Rußpartikeln führt zu ungleichen Temperaturen bei der Regenerierung des Partikelfilters und in Folge dessen zu temperaturinduzierten inneren Spannungen. Infolgedessen kommt es zu einem Temperaturgradienten mit einem Maximum der Temperatur im Bereich der Längsachse des Mittelpunkts der Querschnittsfläche des Filterelements und zum Außendurchmesser hin abfallenden Temperaturen. Der Temperaturgradient wird weiter dadurch verstärkt, dass im inneren Bereich des Partikelfilters die Wärmeabfuhr schlechter als am Außendurchmesser ist.

Wenn der Temperaturgradient zu groß ist, führen die daraus resultierenden inneren Spannungen zu einem Brechen und damit zur Zerstörung und Funktionsunfähigkeit des Filterelements.

### Offenbarung der Erfindung

Der Erfindung liegt die Aufgabe zugrunde, ein Filterelement bereitzustellen, das unempfindlicher gegenüber den bei der Regenerierung auftretenden Temperaturen und den daraus resultierenden inneren Spannungen ist.

Diese Aufgabe wird erfindungsgemäß bei einem Filterelement zur Filterung von Ruß, insbesondere zur Filterung von Abgasen einer Dieselbrennkraftmaschine, wobei das Filterelement aus einem keramischen Werkstoff besteht, mit einer Eintrittsfläche und mit einer Austrittsfläche, mit einer Vielzahl von Eintrittskanälen und mit einer Vielzahl von Austrittskanälen, wobei die Eintrittskanäle an einer Eintrittsfläche des Filterelements beginnen und an einer Austrittsfläche des Filterelements verschlossen sind und wobei die Austrittskanäle an der Eintrittsfläche verschlossen sind und an der Austrittsfläche enden, dadurch gelöst, dass in einem radial inneren Bereich des Filterelements die Zahl der an der Austrittsfläche verschlossenen Kanäle größer ist als die Zahl der an der Eintrittsfläche verschlossenen Kanäle.

Bei dem erfindungsgemäßen Filterelement wird durch das Verschließen von Kanälen im Inneren des Filterelements die auf die Filterfläche bezogene Wärmekapazität des Filterelements erhöht, was dazu führt, dass der Temperaturanstieg bei der Regenerierung im inneren Bereich des Filterelements verringert wird. Infolgedessen sind naturgemäß auch die aus der Temperaturerhöhung resultierenden inneren Spannungen geringer.

Des Weiteren wird die Beladung des Filterelements über den Querschnitt vergleichmäßigt, da durch die verschlossenen Kanäle im Inneren des Filterelements die Abgase zu den äußeren Bereichen des Filterelements umgelenkt werden. Dadurch wird einerseits der innere Bereich des Filterelements weniger mit Ruß beladen und gleichzeitig wird der äußere Bereich des Filterelements, der ohnehin eine bessere Wärmeabfuhr ermöglicht, stärker beladen. Im Ergebnis ergibt sich dadurch eine weitere Vergleichmäßigung der Temperaturen des Filterelements über den gesamten Querschnitt bei der Regenerierung.

Infolgedessen werden die inneren Spannungen reduziert und die Gefahr, dass das Filterelement aufgrund zu hoher innerer Spannungen Risse bekommt oder sogar in mehrere Teile zerbricht, wird deutlich reduziert.

Obwohl bei dem erfindungsgemäßen Filterelement in dessen innerem Bereich manche Kanäle "deaktiviert werden", ist die Zunahme des Strömungswiderstands vergleichsweise gering. Es hat sich bei vermessenen Prototypen herausgestellt, dass der Abgasgegendruck eines solchen Filterelements lediglich 12 % beträgt gegenüber einem mit der gleichen Rußmasse beladenen Filterelement, bei dem der gesamte Querschnitt für die Filterung des Rußpartikel zur Verfügung steht. Dieser vergleichsweise geringe Druckanstieg, der in dieser Größe nur unmittelbar vor der Regenerierung auftritt ist im Fahrbetrieb unkritisch.

Das erfindungsgemäße Filterelement kann ohne nennenswerte Änderungen bei den Produktionswerkzeugen in den Fertigungseinrichtungen herkömmlicher Filterelemente hergestellt werden.

Bei weiteren Ausführungsformen des erfindungsgemäßen Filterelements ist vorgesehen, dass im radial inneren Bereich des Filterelements manche Kanäle beidseitig verschlossen sind. Dadurch werden diese Kanäle überhaupt nicht von Abgasen durchströmt und es kann es sich daher an den Innenwänden dieser Kanäle kein Ruß ablagern.

Es hat sich in praktischen Versuchen als vorteilhaft erwiesen, wenn in dem radial inneren Bereich die Querschnittsflächen der an der Austrittsfläche offenen Kanäle zu den Querschnittsflächen der an der Austrittsseite verschlossenen Kanäle kleiner als 50 : 50 und größer als 12,5 : 87,5 verhält. Besonders vorteilhafte Querschnittsflächenverhältnisse sind 25 : 75; 37,7 : 62,5, 41,67 : 58,1 und 43,57: 56,25.

Diese Flächenverhältnisse lassen sich auf einfachste Weise bei Filterelementen mit quadratischen oder rechteckigen Querschnitten realisieren, indem eine entsprechende Zahl von Kanälen an der Austrittsseite zusätzlich zu den ohnehin vorhandenen Austrittskanälen verschlossen wird.

Aus fertigungstechnischen Gründen hat es sich als vorteilhaft erwiesen, wenn das Filterelement prismatisch ist und/oder das Filterelement rotationssymmetrisch, insbesondere zylindrisch oder zentralsymmetrisch ist.

Als besonders geeignete Werkstoffe zur Herstellung des erfindungsgemäßen Filterelements haben sich Magnesium-Aluminium-Silikate, bevorzugt Cordierit, Siliziumcarbid und AluminiumTitanat erwiesen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Kurze Beschreibung der Zeichnungen

### Zeichnungen

Es zeigen:
- Figur 1: eine schematische Darstellung einer Brennkraftmaschine mit einer erfindungsgemäßen Abgasnachbehandlungseinrichtung,
- Figur 2: ein erfindungsgemäßes Filterelement im Längsschnitt, und
- Figuren 3 bis 8: Ausführungsbeispiele erfindungsgemäßer Filterelemente in einer Ansicht von vorne.

### Ausführungsformen der Erfindung

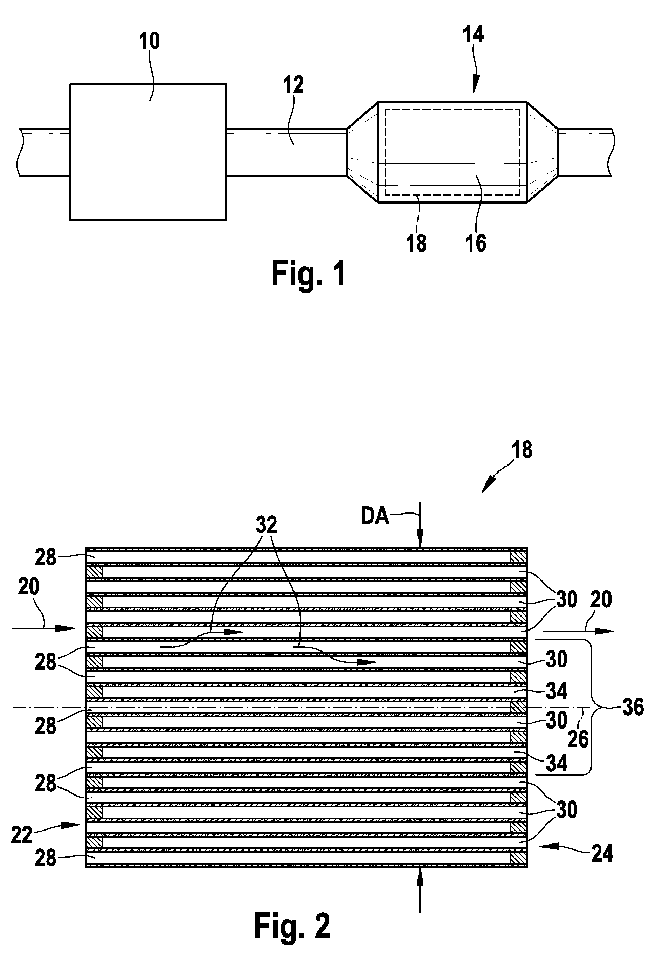

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei Diesel-Brennkraftmaschinen erforderlich, um gesetzliche Bestimmungen einzuhalten.

Die Filtereinrichtung 14 umfasst ein zylindrisches Gehäuse 16, in dem eine im vorliegenden Ausführungsbeispiel rotationssymmetrisches, insgesamt ebenfalls zylindrisches Filterelement 18 angeordnet ist.

In Figur 2 ist ein Querschnitt durch ein erstes Ausführungsbeispiel eines erfindungsgemäßen Filterelements 18 dargestellt. Bei diesem Ausführungsbeispiel ist das Filterelement 18 als extrudierter Formkörper aus einem keramischen Material, wie zum Beispiel Cordierit, hergestellt. Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand (ohne Bezugszeichen) in einen der Austrittskanäle 30. Exemplarisch ist dies durch die Pfeile 32 dargestellt.

Das Filterelement 18 hat einen Außendurchmesser DA. In einem äußeren Bereich des Filterelements 18 wechseln sich Eintrittskanäle 28 und Austrittskanäle 30 ab. Dies bedeutet, dass die Zahl der Eintrittskanäle und der Austrittskanäle in diesem Bereich gleich groß ist.

Ausgehend von diesem regelmäßigen Wechsel zwischen Eintrittskanal 28 und Austrittskanal 30 werden in einem inneren Bereich 36, der symmetrisch zur Längsachse 26 angeordnet ist, zusätzlich an der Austrittsfläche 24 des Filterelements 18 Kanäle 34 gebildet, die ebenfalls an der Austrittsfläche 24 verschlossen sind.

Dadurch wird im inneren Bereich 36 des Filterelements 18 die Zahl der an der Austrittsfläche 24 verschlossenen Kanäle 28, 34 größer als die an der Eintrittsfläche 22 verschlossenen Austrittskanäle 30.

Da die Kanäle 34 bei dem in Figur 2 dargestellten Ausführungsbeispiel an beiden Seiten verschlossen sind, werden sie nicht von den Abgasen durchströmt. Daher lagert sich an den Wänden zwischen der Kanäle 34 nur sehr wenig oder gar kein Ruß ab, so dass bezogen auf die Rußbeladung des Filterelements 18 in dem inneren Bereich 36 die Wärmekapazität des Filterelements 18 größer ist als in dem äußeren Bereich des Filterelements 18. Außerdem werden, da durch das Verschließen der Kanäle 34 der Strömungswiderstand des Filterelements 18 in dem inneren Bereich 36 erhöht wird, die Abgase in den äußeren Bereich (ohne Bezugszeichen) des Filterelements 18 abgelenkt, so dass dort eine erhöhte Rußbeladung stattfindet. Diese beiden Effekte führen jeweils für sich zu einer Vergleichmäßigung des Temperaturprofils bei der Regenerierung des Filterelements und damit zu einer Verringerung der wärmebedingten inneren Spannungen des Filterelements 18 während der Regenerierung.

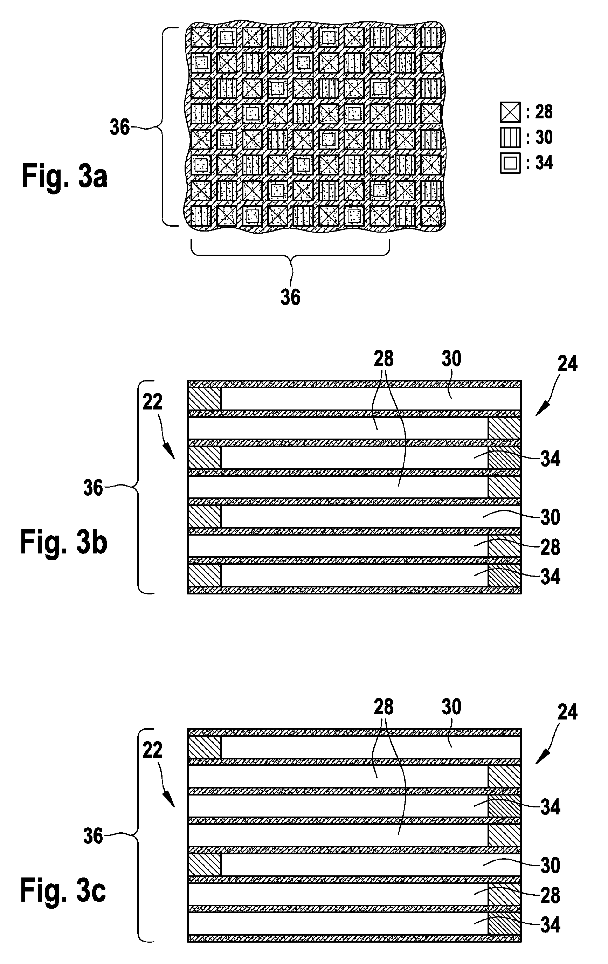

In der Figur 3a ist eine Ansicht von vorne auf den inneren Bereich 36 eines ersten Ausführungsbeispiels eines erfindungsgemäßen Filterelements 18 dargestellt. Dabei haben die Kanäle 28, 30 und 34 jeweils für sich genommen einen quadratischen Querschnitt. Aus der Legende der Figur 3a wird deutlich, wie sich Eintrittskanäle 28, Austrittskanäle 30 und die Kanäle 34 im inneren Bereich 36 abwechseln.

Im rechten Teil der Figur 3a ist als Vergleich der Wechsel von Eintrittskanälen 28 und Austrittskanälen 30 in dem äußeren Bereich des Filterelements dargestellt.

In den Figuren 3b und 3c ist nochmals vergrößert dargestellt, wie die in Figur 3a dargestellte Verteilung der Kanäle 28, 30 und 34 durch Hinzufügen von Verschlussstopfen an der Austrittsseite 24 des Filterelements 18 erreicht werden kann.

Bei dem Ausführungsbeispiel gemäß Figur 3b sind die Kanäle 34 sowohl an der Eintrittsfläche 22 als auch an der Austrittsfläche 24 verschlossen. Bei dem Ausführungsbeispiel gemäß Figur 3c sind die Kanäle 34 lediglich an der Austrittsfläche 24 verschlossen und an der Eintrittsfläche 22 offen. Die Unterschiede in den Herstellungskosten und dem Betriebsverhalten dieser beiden Ausführungsbeispiele sind verhältnismäßig gering. Bei diesem Ausführungsbeispiel ist das Verhältnis der an der Austrittsfläche offenen Kanäle 30 zu den an der Austrittsfläche verschlossenen Kanälen 28 und 34 gleich 25 : 75.

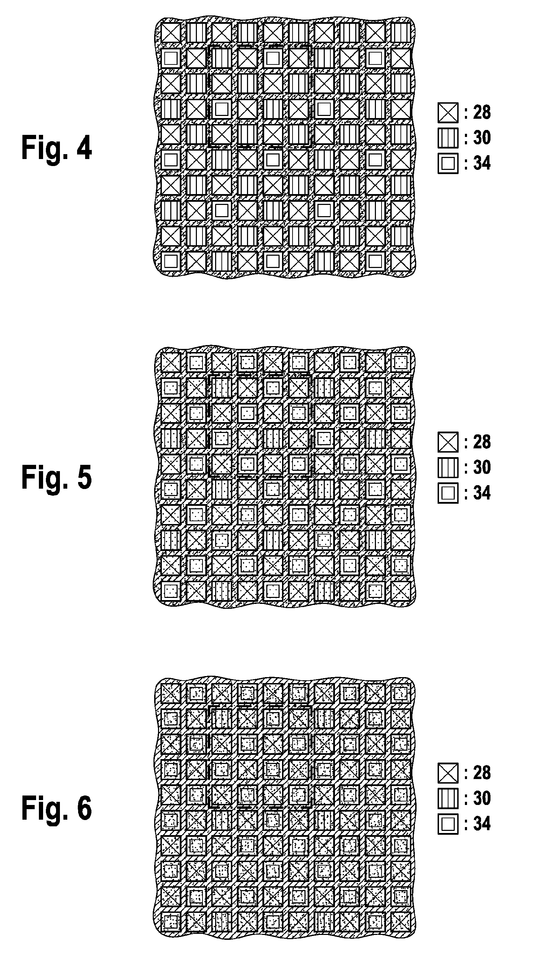

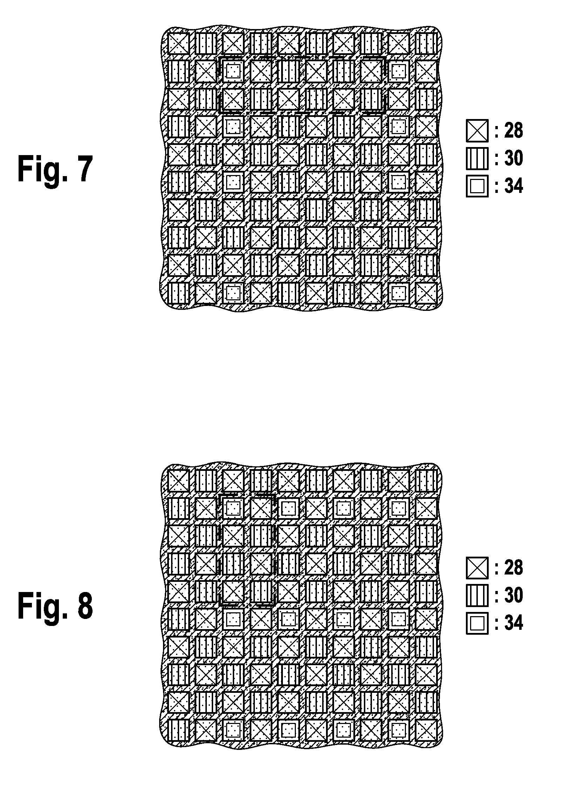

Dem steht ein Verhältnis von 50 : 50 im äußeren Bereich des Filterelements 18 gegenüber. In den Figuren 4 - 8 sind weitere Ausführungsbeispiele der inneren Bereiche 36 erfindungsgemäßer Filterelemente 18 dargestellt.

Allen Ausführungsbeispielen ist gemeinsam, dass die Kanäle 28, 30, 34 einen quadratischen Querschnitt haben und die Beeinflussung des Verhältnisses der an der Austrittsseite offenen Kanäle 30 zu den an der Austrittsfläche 24 verschlossenen Kanälen 28, 34 durch Hinzufügen zusätzlicher Verschlussstopfen erfolgt. Die Kennzeichnung der Kanäle 28, 30 und 34 entspricht der in dem Ausführungsbeispiel gemäß Figur 3a, so dass auf die dort gezeigte Legende Bezug genommen wird. Allerdings ist die Erfindung nicht auf quadratische Kanalquerschnitte beschränkt.

Der wesentliche Unterschied der nachfolgenden Ausführungsbeispiele ist deren Verhältnis von an der Austrittsfläche 24 offenen Kanälen zu an der Austrittsseite 24 verschlossenen Kanälen. In Figur 4 beträgt dieses Verhältnis 37,5 : 62,5. In Figur 5 beträgt dieses Verhältnis 12,5 : 87,5, während es in den Figuren 6, 7 und 8 43,75 : 56,25; 41,67 : 58,33 und 37,5 : 62,5 beträgt.

## Patentansprüche

1. Filterelement zur Filterung von Russ, insbesondere zur Filterung von Abgasen einer Dieselbrennkraftmaschine, wobei das Filterelement (18) aus einem keramischen Werkstoff besteht, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28) an der Eintrittsfläche (22) beginnen und an der Austrittsfläche (24) verschlossen sind, und wobei die Austrittskanäle (30) an der Eintrittsfläche (22) verschlossen sind und an der Austrittsfläche (24) enden, **dadurch gekennzeichnet, dass** in einem radial inneren Bereich () des Filterelements (18) die Zahl der an der Austrittsfläche (24) verschlossenen Kanäle (30, 34) größer ist als die Zahl der an der Eintrittsfläche (22) verschlossenen Kanäle (28).

2. Filterelement nach Anspruch 1, **dadurch gekennzeichnet, dass** in dem radial inneren Bereich (36) des Filterelements (18) beidseitig verschlossene Kanäle (34) vorgesehen sind.

3. Filterelement nach einem der vorhergehenden Ansprüche, **dadurch gekennzeichnet, dass** der radial innere Bereich (36) etwa 35% eines Gesamtdurchmesser (Dₐ) des Filterelements (18) einnimmt.

4. Filterelement nach einem der vorhergehenden Ansprüche, **dadurch gekennzeichnet, dass** sich in dem radial inneren Bereich (36) die Querschnittsflächen der Austrittskanäle (30) zu den Querschnittsflächen der Eintrittskanäle (28) und der Kanäle (34) mindestens wie 12,5: 87,5 und kleiner als 50:50 verhalten.

5. Filterelement nach Anspruch 1, **dadurch gekennzeichnet, dass** sich in dem radial inneren Bereich (36) die Querschnittsflächen der Austrittskanäle (30) zu den Querschnittsflächen der Eintrittskanäle und der Kanäle (34) in etwa wie 25:75, 37,7:62,5, 41,67 : 58,1 oder 43,75 : 56,25 verhält.

6. Filterelement nach einem der vorhergehenden Ansprüche, **dadurch gekennzeichnet, dass** das Filterelement (18) prismatisch ist.

7. Filterelement nach einem der vorhergehenden Ansprüche, **dadurch gekennzeichnet, dass** die Kanäle (28, 30, 34) einen quadratischen oder rechteckigen Querschnitt haben.

8. Filterelement nach einem der vorhergehenden Ansprüche, **dadurch gekennzeichnet, dass** im inneren Bereich (36) des Filterelements (18) manche Kanäle (34) sowohl an der Eintrittsfläche (22) als auch an der Austrittsfläche (24) verschlossen sind.

9. Filterelement nach einem der vorhergehenden Ansprüche, **dadurch gekennzeichnet, dass** das Filterelement (18) aus Cordierit oder SiliciumCarbid (SiC) besteht.
